# EUROPÄISCHE PATENTSCHRIFT

(11) **EP 2 271 963 B1**
(45) Veröffentlichungstag und Bekanntmachung des Hinweises auf die Patenterteilung: **09.11.2011**
(21) Anmeldenummer: 09737522.4
(22) Anmeldetag: 29.04.2009
(51) Int. Cl.: G02C 5/22

(54) **FEDERSCHARNIER ZUR VERWENDUNG ZWISCHEN EINEM BÜGEL UND EINEM BÜGELBACKEN EINER BRILLE**
ELASTIC HINGE FOR USE BETWEEN A TEMPLE AND A FRAME OF A PAIR OF SPECTACLES
CHARNIÈRE À RESSORT DESTINÉE A ETRE SITUÉE ENTRE UNE BRANCHE ET UN TENON DE LUNETTES

(30) Priorität: 02.05.2008 AT 6902008
(43) Veröffentlichungstag der Anmeldung: 12.01.2011
(73) Patentinhaber: Redtenbacher Präzisionsteile Ges. M.B.H., 4644 Scharnstein (AT)
(72) Erfinder: BUCHEGGER, Harald, A-4644 Scharnstein (AT)
(74) Vertreter: Hübscher, Helmut
(86) Internationale Anmeldenummer: PCT/AT2009/000175
(87) Internationale Veröffentlichungsnummer: WO 2009/132370

(56) Entgegenhaltungen:
- EP-A- 1 059 552
- EP-A- 1 821 132
- WO-A-01/31386
- WO-A-2005/111699

## Beschreibung

### Technisches Gebiet

Die Erfindung bezieht sich auf ein im Anspruch 1 beschriebenes Federscharnier zur Verwendung zwischen einem Bügel und einem Bügelbacken einer Brille, wobei das Federscharnier mit einem eine Lagergabel formenden backenseitigen Scharnierteil, mit einem in der Lagergabel durch eine Scharnierachse drehbar gelagerten bügelseitigen Scharnierteil und mit einem den bügelseitigen Scharnierteil tragenden, U-förmigen Gleitstück mit zwei schenkeln, das in einer Ausnehmung eines bügelseitigen Gehäuses in Bügellängsrichtung verschiebbar geführt ist und zwischen seinen beiden Schenkeln eine Schraubenfeder aufnimmt, die sich einerseits an einem die beiden Schenkel des U-förmigen Gleitstückes verbindenden Steg und anderseits an einem Widerlager abstützt, das durch eine koaxial zur Schraubenfeder verlaufende Durchtrittsöffnung im bügelseitigen Scharnierteil in ein zur Schraubenfeder koaxiales Muttergewinde des Gehäuses eingreift.

### Stand der Technik

Um ein Federscharnier, dessen Scharnierteile üblicherweise auf der Innenseite des Bügelbackens und des Bügels einer Brille angeordnet sind, verdeckt anzuordnen, ist es bei Kunststoffbrillen bekannt (WO 2006/053983 A1), den eine Lagergabel formenden backenseitigen Scharnierteil in eine Aufnahmetasche des Bügelbackens einzusetzen und auch das den bügelseitigen, federbeaufschlagten Scharnierteil verschiebbar aufnehmende Gehäuse als vom Bügel umschlossenen Einsatz auszubilden, sodass die Scharnierteile im Wesentlichen nur über die Stirnseiten des Bügelbackens bzw. des Bügels vorstehen und bei geöffnetem Bügel nicht erkennbar sind, weil die Stirnseiten des Bügelbackens und des Bügels durch das Federscharnier flächig aneinandergedrückt werden. Es verbleibt lediglich eine für das Verschwenken des bügelseitigen Scharnierteils erforderliche Aussparung auf der Backeninnenseite. Nachteilig ist allerdings, dass die Scharnierachse durch eine Durchtrittsöffnung im Bügelbacken eingesetzt werden muss, was nicht nur Montageschwierigkeiten mit sich bringt, sondern auch die eingesetzte Scharnierachse von außen erkennen lässt.

Zur Sicherstellung einfacher Montagebedingungen ist es bei Federscharnieren außerdem bekannt (AT 502 196 B1), den bügelseitigen Scharnierteil mit einem in eine Gehäuseausnehmung eingreifenden, U-förmigen Gleitstück zu versehen, das zwischen seinen beiden Schenkeln eine Schraubenfeder aufnimmt, die sich einerseits am die beiden Schenkeln des Gleitstücks verbindenden Steg und anderseits an einem Widerlager abstützt, das in ein zur Schraubenfeder koaxiales Muttergewinde des Gehäuses eingeschraubt wird, und zwar durch eine koaxiale Durchtrittsöffnung des bügelseitigen Scharnierteils. Eine solche Konstruktion stellt eine vorteilhafte Voraussetzung für ein in Umfangsrichtung geschlossenes Gehäuse dar, das ohne Schwierigkeiten von der Stirnseite her in einen Brillenbügel eingesetzt werden kann. Für den verdeckten Einsatz eines solchen bekannten Federscharniers bleiben jedoch die im Bereich des Bügelbackens auftretenden Schwierigkeiten ungelöst.

### Darstellung der Erfindung

Der Erfindung liegt somit die Aufgabe zugrunde, ein Federscharnier zwischen einem Bügel und einem Bügelbacken der eingangs geschilderten Art so auszugestalten, dass eine verdeckte Anordnung im Backenbereich möglich wird, ohne den Bügelbacken mit einer Durchtrittsöffnung für die Scharnierachse versehen zu müssen.

Die Erfindung löst die gestellte Aufgabe dadurch, dass der backenseitige Scharnierteil einen in eine seitlich geschlossene Aufnahmetasche des Bügelbackens eingesetzten Einsatz bildet und dass der Bügelbacken mit dem Einsatz in der abgewinkelten Bügelstellung einen zur Schraubenfeder koaxialen Durchtritt für das Widerlager freigibt.

Wegen der seitlich geschlossenen Aufnahmetasche des Bügelbackens wird die Scharnierachse lediglich in der Lagergabel des backenseitigen Scharnierteils gehalten, sodass Durchtrittsbohrungen im Bügelbacken zum Einsetzen der Scharnierachse entfallen. Dies macht jedoch den nachträglichen Einsatz des bereits mit dem backenseitigen Scharnierteil gelenkig verbundenen bügelseitigen Scharnierteils in das bügelseitige Gehäuse erforderlich. Das zur Schraubenfeder des Federscharniers koaxiale Einschrauben des gehäuseseitigen Widerlagers für die Schraubenfeder durch eine entsprechende Durchtrittsöffnung im bügelseitigen Scharnierteil bietet hiefür eine vorteilhafte Voraussetzung. Es muss jedoch eine Zugangsmöglichkeit zur Durchtrittsöffnung im bügelseitigen Scharnierteil geschaffen werden, indem der Bügelbacken mit dem die Lagergabel bildenden Einsatz und der Scharnierachse in der abgewinkelten Bügelstellung einen zur Schraubenfeder koaxialen Durchtritt für das Widerlager freigibt. Zur Montage ist daher der am Bügelbacken bereits angelenkte, bügelseitige Scharnierteil mit der Schraubenfeder in der Winkelstellung für den eingeklappten Bügel in das im Bügel eingelassene Gehäuse einzuschieben und mit dem durch die Durchtrittsöffnung im bügelseitigen Scharnierteil in das Muttergewinde des Gehäuse eingeschraubten Widerlager zu sichern, womit die Montage abgeschlossen ist.

Damit die Scharnierachse den koaxialen Durchtritt des Widerlagers zur Durchtrittsöffnung im bügelseitigen Scharnierteil nicht behindert, ohne gegenüber der Schraubenfederachse entsprechend versetzt zu werden, kann die Scharnierachse im Bereich des Durchtritts für das Widerlager ausgenommen sein. Diese Schwächung der Scharnierachse spielt keine Rolle, weil im Verbindungsbereich der beiden Scharnierteile der volle Querschnitt der Scharnierachse zur Verfügung steht. Eine andere Möglichkeit, den freien Durchtritt des Widerlagers zur Durchtrittsöffnung im bügelseitigen Scharnierteil zu ermöglichen, besteht darin, die Scharnierachse aus zwei durch das Widerlager in einem axialen Abstand voneinander gehaltenen Achsstummeln zu bilden. Diese Ausführungsvariante ermöglicht außerdem eine nachträgliche Demontage des Scharniers, weil nach dem Lösen des Widerlagers die Achsstummel nacheinander aus den Aufnahmebohrungen in den beiden Scharnierteilen entnommen werden können.

### Kurze Beschreibung der Zeichnung

In der Zeichnung ist der Erfindungsgegenstand beispielsweise dargestellt. Es zeigen
- Fig. 1: ein erfindungsgemäßes Federscharnier zwischen einem Bügel und einem Bügelbacken einer Brille bei abgewinkeltem Bügel in einem Längsschnitt,
- Fig. 2: dieses Federscharnier in einem Schnitt nach der Linie II-II der Fig. 1,
- Fig. 3: einen Schnitt nach der Linie III-III der Fig. 1 jedoch bei gestrecktem Bügel und
- Fig. 4: eine der Fig. 2 entsprechende Darstellung einer Konstruktionsvariante eines erfindungemäßen Federscharniers.

### Weg zur Ausführung der Erfindung

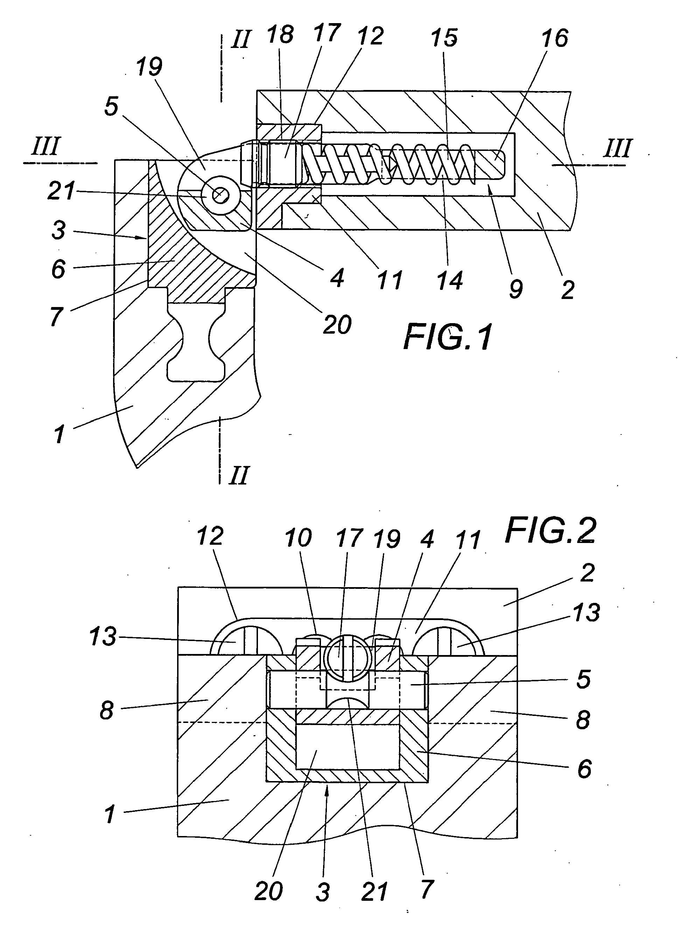

Das Federscharnier gemäß den Fig. 1 bis 3 weist zwei einerseits einen Bügelbacken 1 und anderseits einen Bügel 2 einer Brille zugehörige Scharnierteile 3 und 4 auf, die mit Hilfe einer Scharnierachse 5 schwenkbar miteinander verbunden sind. Der Scharnierteil 3 bildet dabei einen Einsatz in Form einer Lagergabel 6, der in eine Aufnahmetasche 7 mit geschlossenen Seitenwänden 8 eingesetzt ist.

Der bügelseitige Scharnierteil 4 bildet ein U-förmiges Gleitstück 9, das in einer Ausnehmung 10 eines Gehäuses 11 in Bügellängsrichtung verschiebbar geführt ist. Dieses Gehäuse 11 wird in eine stirnseitige Bügelausnehmung 12 eingesetzt und mit Befestigungsschrauben 13 fixiert. Zwischen den Schenkeln 14 des Gleitstücks 9 ist eine Schraubenfeder 15 vorgesehen, die sich einerseits am die beiden Schenkel 14 miteinander verbindenden Steg 16 und anderseits an einem Widerlager 17 abstützt, das in ein zur Schraubenachse koaxiales Muttergewinde 18 des Gehäuses 11 eingeschraubt wird, und zwar durch eine zur Schraubenfeder 15 koaxial verlaufende Durchtrittsöffnung 19 des Scharnierteils 4, wie dies insbesondere der Fig. 1 entnommen werden kann.

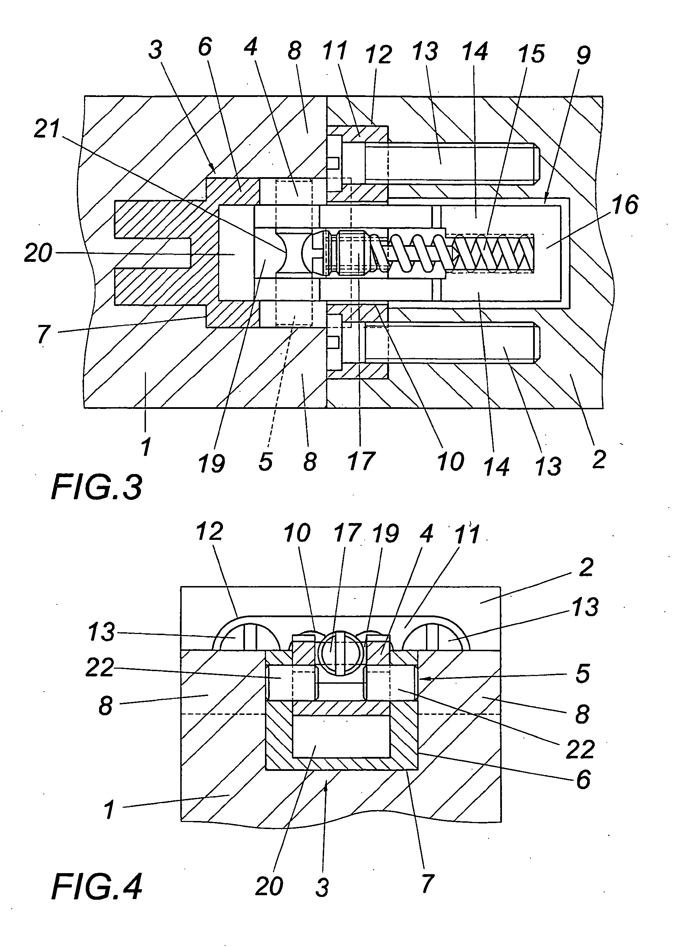

Zur Montage des Federscharniers ist zunächst der Scharnierteil 4 in die Lagergabel 6 des Scharnierteils 3 einzusetzen und mit Hilfe der Scharnierachse 5 zu sichern, die über die Lagergabel 6-nicht vorsteht, sodass der Scharnierteil-3 mit dem angelenkten Scharnierteil 4 in die Aufnahmetasche 7 des Bügelbackens 1 formschlüssig eingesetzt werden kann. Danach kann der Scharnierteil 4 mit der zwischen den Schenkeln 14 eingesetzten Schraubenfeder 15 in das an der Stirnseite des Bügels 2 befestigte Gehäuse 11 eingeschoben werden, um mit Hilfe des Widerlagers 17 gegenüber dem Gehäuse 11 gesichert zu werden. Zu diesem Zweck ist der Scharnierteil 4 in einer Winkelstellung für den eingeklappten Bügel 2 zu halten, wie dies den Fig. 1 und 2 entnommen werden kann. In dieser Stellung bildet der Bügelbacken 1 mit dem durch die Lagergabel 6 gebildeten Einsatz einen zur Schraubenfeder 15 koaxialen Durchtritt zum Einschrauben des Widerlagers 17 in das Muttergewinde 18 des Gehäuses 11 durch die Durchtrittsöffnung 19 des Scharnierteils 4 hindurch. Mit dem Einschrauben des Widerlagers 17 in das Gehäuse 11 ist die Montage abgeschlossen. Der Bügelbacken 1 wird daher über die Schraubenfeder 15 gegen die Stirnseite des Bügels 2 federnd angezogen, was eine spielfreie, flächige Anlage des Bügelbackens 1 an der Stirnfläche des Bügels 2 gewährleistet. Das Federscharnier ist in der in der Fig. 3 dargestellten Strecklage des Bügels 2 von außen nicht erkennbar. Es verbleibt lediglich auf der Bügelinnenseite die für die Schwenkbewegung des Scharnierteils 4 erforderliche Gabelöffnung 20.

Wie insbesondere der Fig. 2 entnommen werden kann, wird bei einer nur geringfügigen Versetzung der Scharnierachse 5 gegenüber der Achse der Schraubenfeder 15 der behinderungsfreie Einsatz des Widerlagers 17 nur dann ermöglicht, wenn die Scharnierachse 5 eine Ausnehmung 21 für den Durchtritt des Widerlagers 17 bildet.

Die Fig. 4 unterscheidet sich von der Ausführungsform nach der Fig. 1 bis 3 lediglich durch die Ausbildung der Scharnierachse 5 in Verbindung mit dem Widerlager 17. Die Scharnierachse 5 setzt sich nämlich gemäß der Fig. 4 aus zwei Achsstummeln 22 zusammen, die durch den zu diesem Zweck verlängerten und daher in den Bereich der Scharnierachse 5 ragenden Kopf des Widerlagers 17 in einem gegenseitigen Abstand voneinander gehalten werden. Diese Ausführungsform der Scharnierachse 5 erlaubt das nachträgliche Einsetzen des Scharnierteils 4 in die bereits im Bügelbacken 1 verankerte Lagergabel 6, weil die Achsstummel 22 durch die Durchtrittsöffnung 19 des Scharnierteils 4 nacheinander eingerührt und dann in axialer Richtung in die Lagerbohrungen eingeschoben werden können. Dies bedeutet aber auch, dass der Scharnierteil 4 auch nachträglich aus der Lagergabel 6 gelöst werden kann, wenn nach der Entnahme des Widerlagers 17 die Achsstummeln 22 zunächst axial in den Bereich der Durchtrittsöffnung 19 verlagert und dann quer zu ihrer Achse der Durchtrittsöffnung 19 entnommen werden.

## Patentansprüche

1. Federscharnier zur Verwendung zwischen einem Bügel (2) und einem Bügelbacken (1) einer Brille, wobei das Federscharnier mit einem eine Lagergabel (6) formenden backenseitigen Scharnierteil (3), mit einem in der Lagergabel (6) durch eine Scharnierachse (5) drehbar gelagerten bügelseitigen Scharnierteil (4) und mit einem den bügelseitigen Scharnierteil (4) tragenden, U-förmigen Gleitstück (9) mit zwei Schenkeln (14) versehen ist, wobei das U-förmige Gleitstück (9) im eingebauten Zustand in einer Ausnehmung (10) eines bügelseitigen Gehäuses (11) in Bügellängsrichtung verschiebbar geführt ist und zwischen seinen beiden Schenkeln (14) eine Schraubenfeder (15) aufnimmt, die sich einerseits an einem die beiden Schenkel (14) des U-förmigen Gleitstückes (9) verbindenden Steg (16) und anderseits an einem Widerlager (17) abstützt, das durch eine koaxial zur Schraubenfeder (15) verlaufende Durchtrittsöffnung (19) im bügelseitigen Scharnierteil (4) in ein zur Schraubenfeder (15) koaxiales Muttergewinde (18) des Gehäuses (11) eingreift, **dadurch gekennzeichnet, dass** der backenseitige Scharnierteil (4) im eingebauten Zustand einen in eine seitlich geschlossene Aufnahmetasche (7) des Bügelbackens (1) eingesetzten Einsatz bildet und dass der Bügelbacken (1) mit dem Einsatz in der abgewinkelten Bügelstellung einen zur Schraubenfeder (15) koaxialen Durchtritt für das Widerlager (17) freigibt.

2. Federscharnier nach Anspruch 1, **dadurch gekennzeichnet, dass** die Scharnierachse (5) im Bereich des Durchtritts für das Widerlager (17) ausgenommen ist.

3. Federscharnier nach Anspruch 1, **dadurch gekennzeichnet, dass** die Scharnierachse (5) aus zwei durch das Widerlager (17) in einem axialen Abstand voneinander gehaltenen Achsstummeln (22) besteht.

## Claims

1. Spring hinge for use between a temple (2) and a temple arm (1) of a pair of spectacles, wherein the spring hinge is provided with an arm-side hinge part (3), which forms a bearing fork (6), a temple-side hinge part (4), which is mounted so as to be able to rotate in the bearing fork (6) by means of a hinge spindle (5), and a U-shaped sliding piece (9), which supports the temple-side hinge part (4) and has two limbs (14), wherein the U-shaped sliding piece (9), in the installed state, is guided so as to be displaceable in a recess (10) of a temple-side housing (11) in the temple longitudinal direction and receives a helical spring (15) between its two limbs (14), which helical spring is supported on one side on a web (16), which connects the two limbs (14) of the U-shaped sliding piece (9), and is supported on the other side on an abutment (17) which engages through an opening (19), which extends coaxially with respect to the helical spring (15), in the temple-side hinge part (4) into a nut thread (18) of the housing (11) which is coaxial with respect to the helical spring (15), **characterised in that** in the installed state the arm-side hinge part (4) forms an insert, which is inserted into a laterally closed receiving pocket (7) of the temple arm (1), and that in the angled temple position the temple arm (1) with the insert releases a passage for the abutment (17), which passage is coaxial with respect to the helical spring (15).

2. Spring hinge as claimed in claim 1, **characterised in that** the hinge spindle (5) is recessed in the region of the passage for the abutment (17).

3. Spring hinge as claimed in claim 1, **characterised in that** the hinge spindle (5) consists of two stub shafts (22) which are held at an axial spaced interval from one another by means of the abutment (17).

## Revendications

1. Charnière à ressort, pour utilisation c-ntr2 une branche (2) et un tenon (1) de lunettes, la charnière à ressort étant munie d'une partie de charnière (3), située côté tenon, formant une fourche de palier (6), d'une partie de charnière (4), située côté branche, montée à rotation dans la fourche de palier (6) au moyen d'un axe de charnière (5), et d'une pièce de glissement (9) en forme de U, portant la partie de charnière (4) située côté branchue, avec deux branches (14), la pièce de glissement (9) en forme de U, à l'état monté, étant guidée, de manière déplaçable dans la direction longitudinale de branche, dans un évidement (10) d'un boîtier (11) situé côté branche, et recevant, entire ses deux branches (14), un ressort hélicoïdal (15) prenant appui, d'un côté, sur une nervure (16) reliant les deux branches (14) de la pièce de glissement (9) en forme de U et, de l'autre côté, sur un contre-palier (17), s'engageant à travers une ouverture de passage (19), s'étendant coaxialement au ressort hélicoïdal (15), dans la partie de charnière (4) située côté branche, dans un filetage d'écrou (18), coaxial au ressort hélicoïdal (15), du boîtier (11), caractérisée en ce la partie de charnière (4) située côté branche, à l'état monté, forme un insert, introduit dans une poche de logement (7), fermée latéralement, du tenon (1), et en ce que le tenon (1), avec l'insert à la position de branche dépliée, libère un passage, coaxial au ressort hélicoïdal (15), pour le contre-pa.lier (17).

2. Charnière à ressort selon la revendication 1, **caractérisée en ce que** l'axe de charnière (5) est évidé dans la zone du passage pour le contre-palier (17).

3. Charnière à ressort selon la revendication 7., caractérisée en ce l'axe de charnière (5) est composé de deux bouts d'axe (22), maintenus à une distance axiale l'un de l'autre par le contre-palier (17).
